Europäisches Patentamt

European Patent Office

Office européen des brevets

(11) Publication number: **0 214 305 B1**

(12) # EUROPEAN PATENT SPECIFICATION

(45) Date of publication of patent specification: **17.06.92**

(51) Int. Cl.5: **H01F 27/24**, H01F 3/04, H01F 41/02

(21) Application number: **86901512.3**

(22) Date of filing: **27.02.86**

(86) International application number:
**PCT/JP86/00096**

(87) International publication number:
**WO 86/05314 (12.09.86 86/20)**

(54) **PROCESS FOR THE PRODUCTION OF A LAMINATE OF THINAMORPHOUS ALLOY STRIP AND A CORE MADE OF THIN AMORPHOUS ALLOY STRIP.**

(30) Priority: **27.02.85 JP 36612/85**

(43) Date of publication of application:
**18.03.87 Bulletin 87/12**

(45) Publication of the grant of the patent:
**17.06.92 Bulletin 92/25**

(84) Designated Contracting States:
**DE FR GB SE**

(56) References cited:
**JP-A- 5 739 510
JP-A-58 175 654
JP-A-58 210 976**

(73) Proprietor: **KAWASAKI STEEL CORPORATION
No. 1-28, 1-Chome Kitahonmachi-Dori
Chuo-Ku, Kobe-Shi Hyogo 651(JP)**

(72) Inventor: **MORITO, Nobuyuki Kawasaki Steel
Corporation
Research Laboratories 1, Kawasaki-cho
Chiba-shi
Chiba 260(JP)**

(74) Representative: **Overbury, Richard Douglas et
al
HASELTINE LAKE & CO Hazlitt House 28
Southampton Buildings Chancery Lane
London WC2A 1AT(GB)**

Rank Xerox (UK) Business Services

# EP 0 214 305 B1

## Description

The present invention relates to process for the production of a laminate in which a plurality of amorphous alloy thin sheets with excellent magnetic characteristics is laminated together,.

When a molten alloy such as an Fe-B-Si system or a Co-Fe-B-Si system is rapidly solidified at a cooling speed of around $10^5$ to $10^6$ °C/sec according to a single roll method or a double roll method, amorphous magnetic alloy thin sheets of a thickness of about 20 to 50 $\mu$m with a disorderly atomic arrangement are obtained.

Since such amorphous alloy thin sheets are excellent in soft magnetic characteristics and particularly the Fe-B-Si system has a relatively high saturated magnetic flux density and an extremely low iron loss, they have been noted as convincing substituting materials for the silicon steel sheets which are currently used as iron core materials for transformers and motors.

It is common practice that a coiled core or a laminated core is formed from these amorphous alloy thin sheets (hereinafter referred to as "ribbons") as a single sheet without ordinarily being bonded so as to assemble transformers. However, in general, such transformers were disadvantageous in that the number of steps necessary for the lamination becomes larger because the thickness of the ribbon is smaller as compared with the conventionally employed silicon steel sheets and the like.

Although by means of thickening the ribbon, etc. the above shortcoming can be removed it is reported that this induces the deterioration of the iron loss. In this respect, if a plurality of ribbons can be laminated, advantages result in that the insulating resistance between the ribbons can be improved and in that a decrease in the eddy current loss and in its turn the iron loss can be attained in addition to a reduction in the number of steps of the lamination.

For this purpose, experiments on adhering the ribbons have been recently begun. As proposed, for instance, in Japanese patent application laid-open No. 56-36,336 and 58-175,654, after the ribbons are coated with an adhesive, laminated together, dried and fully solidified, they are ordinarily sheared and laminated or coiled to produce a core.

However, according to the above-mentioned prior art technique, an adhesive is uniformly coated onto the whole surface of the ribbons, and fully solidified. Thus, non-uniform stress is applied to the ribbons due to the restraint of the adhering layer in shaping, such as multiple turn coiling, which disadvantageously deteriorates the magnetic characteristics.

Further, when the ribbons are used as a magnetic material, annealing at a temperature not more than the Curie point in a magnetic filed is ordinarily indispensable to release internal strain introduced during super rapid quenching and to orderly arrange magnetic sections. Although this is also applicable to the laminate, there remains a problem in that the iron loss is worsened depending upon the kind of the adhesive and the annealing conditions even when no working such as coil shaping is performed.

JP-A-5 739 510 describes a process for producing a laminate by bonding together amorphous alloy sheets using an adhesive where the adhesive is applied in the form of discontinuous layers. In this case, however, the adhesives are macromolecular compounds such as poly(phenylene) oxide, poly (p-xylene), aromatic polysuplhone, aromatic polyamide, and phenoxy resins. Such adhesives result in significant deterioration in iron loss on annealing.

The present invention has been developed in view of the above-mentioned present situation, and proposes an amorphous alloy thin sheet laminate and a core which causes no deterioration of the magnetic characteristics, in other words, the deterioration of characteristics due to the adhesion, even when working such as coil shaping is performed, not to mention no deterioration of iron loss, even when a heat treatment such as annealing in a magnetic field, together with advantageous production processes thereof.

According to a first aspect of the present invention there is provided a process for the production of a laminate comprising a plurality of adhesive layers which process comprises the steps of

(i) coating a thin sheet of amorphous alloy with a discontinuous layer of adhesive,

(ii) applying a second thin sheet of amorphous alloy to said adhesive layer and laminating and contact bonding said thin sheets of amorphous alloy by means of said adhesive layer,

(iii) coating an outside surface of said laminated thin sheets of amorphous alloy with a further discontinuous layer of adhesive,

(iv) applying a further thin sheet of amorphous alloy to said further adhesive layer and laminating and contact bonding said further thin sheet of amorphous alloy to said laminated thin sheets of amorphous alloy by means of said further adhesive layer,

(v) repeating steps (iii) and (iv) to form a laminate having the desired number of thin sheets of amorphous alloy, and

(vi) subjecting said laminate to at least one heat treatment characterised in that said adhesive layers

2

substantially comprise a borosiloxane resin and in that said adhesive layers applied discontinuously between the thin sheets of amorphous alloy are subjected to a preliminary drying at a temperature of from 250 to 300°C prior to said heat treatment.

According to a second aspect of the present invention there is provided a process for the production for a core for a transformer comprising the process of forming a laminate in accordance with the first aspect of the invention and, after the preliminary drying, preliminarily moulding the laminate to form the core.

In an embodiment of the invention the area of the thin sheets of amorphous alloy occupied by the adhesive is from 0.1 to 50% and the adhesive is applied in an amount of from 0.05 to 3 $gm^{-2}$.

In another embodiment of the invention the final thickness of the adhesive layer is from 0.05 to 2.0$\mu$m.

In yet another embodiment of the invention the heat treatment includes a treatment in a magnetic field at a temperature of from 300 to 450°C.

The heat treatment may be an annealing.

After the inventors had repeatedly made exhaustive studies to attain the above objects, they have obtained the following results:

(1) In case that an adhesive is applied to the whole surface of a thin sheet in adhering the ribbons, when the softness of the adhesive is preserved while the adhesive is merely preliminarily dried at most prior to the working (such as coiling), and an annealing in the magnetic field which is to be performed after the working is utilized as the heat treatment for the finish drying, any problems conventionally found in the forming of the laminates do not occur.

(2) When the adhered state of the adhesive on the surface of the thin sheet is restricted locally to partial adhesion and non-adhered areas are provided around the adhered portions, the production of the non-uniform stress is greatly reduced as compared with the conventional technique.

(3) Even where the thin sheets are Fe system ribbons, which require a high temperature of not less than 350°C when annealing in the magnetic field, the adhering ability is not lowered even after the above-mentioned high temperature annealing when the adhesive is mainly composed of borosiloxane resin.

The present invention refers to a process for the production of a laminate of amorphous alloy thin sheet provided with an adhering layer composed of an adhesive mainly consisting of borosiloxane resin between the amorphous alloy thin sheets.

When the laminate is successively subjected to shaping such as coiling, the adhesive layer is preferably set in only a preliminarily dried state, that is, in a state in which although the adhesive proceeds to react up to a stage in which the adhesive does not absorb moisture, the flexiblity is maintained.

The reason is that since the adhering layer in this state has sufficient softness, the stress is reduced even upon application of the stress and the adhering layer is not peeled off even in shearing, so that the magnetic characteristics are not damaged.

The preliminarily drying treatment is preferably done at 250 to 300°C for around 1 to 5 minutes. When such a treatment is performed, the ribbons do not become rusted due to residual water resulting from insufficient drying.

Further, when the ribbons are converted into the laminate and the laminate is used as it is, in the form of a plate, without undergoing shaping, for instance coiling, the thickness of the adhering layer becomes important in order to avoid a deterioration in the magnetic characteristics due to the adhesion.

Three ribbons having a thickness of 28 $\mu$m and a width of 5 cm with a composition of $Fe_{78}B_{12}Si_{10}$ were prepared. An adhesive mainly consisting of borosiloxane was applied to the whole opposite surfaces of one of the ribbons while being variously changed in a range of from 0 to 10 $g/m^2$ such that the thickness of the adhering layer after the drying may be from 0 to 5.0 $\mu$m. After air drying, the other ribbons were laminated upon the opposite surfaces of the first ribbon. The three ribbons were laminated together under pressure between contact bonding rolls. Then, after the ribbons were adhered together under heating at 250°C for 5 minutes, the laminate was annealed at 370°C in a magnetic field of 200 A/m for one hour and left to cool.

The relationship between the thickness of the adhering layer and the iron loss of the thus obtained laminate was examined, and results thereof are shown in Table 1.

Table 1

| Thickness of adhering layer ($\mu$m) | Iron loss $W_{13/50}$ (W/kg) |
|---|---|
| 0 | 0.11 |
| 0.5 | 0.10 |
| 1.0 | 0.11 |
| 2.0 | 0.11 |
| 3.0 | 0.14 |
| 4.2 | 0.16 |
| 5.0 | 0.18 |

As is evident from Table 1, when the thickness of the adhering layer is not more than 2.0 m, the deterioration of the iron loss due to the adhesion is not observed. However, if the thickness of the adhering layer is less than 0.05 m, sufficient adhesive strength can not be obtained. Thus, in the case of the whole surface adhesive application, the thickness of the adhering layer is preferably around from 0.05 to 2.0 m.

On the other hand, when the ribbons are partially adhered with the adhesive, the ribbons are shaped without suffering from non-uniform stress production and the adhering layer peeling-off even if the adhesive is solidified through final drying, not to mention the preliminary drying state.

Reference will be made, by way of example only, to the following figures, in which:-

Figs. 1a-1d are views showing preferred application patterns of the adhesive in a partial adhesion;

Fig. 2 is a graph showing the relationship between the applied amount and the iron loss after the adhesive is dried and solidified;

Fig. 3 is a view illustrating the molecular structure of borosiloxane; and

Fig. 4 is a graph showing reduction in weight of borosiloxane through heating.

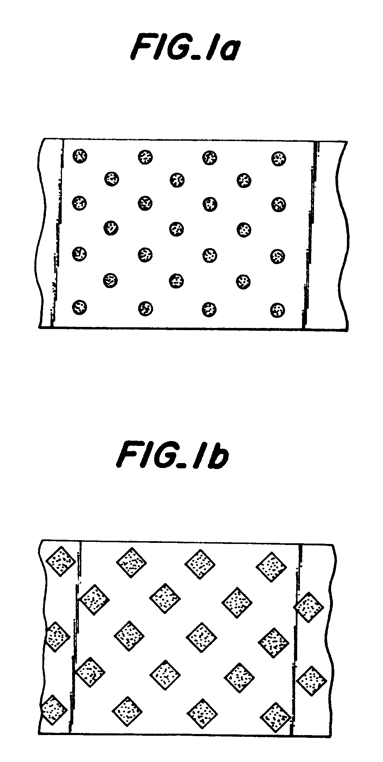

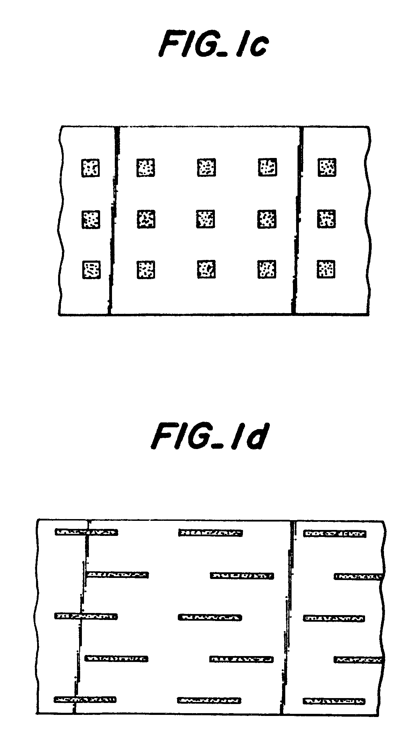

The preferred application patterns of the adhesive are shown in Figs. 1a to 1d. It is preferred that the occupying area ratio and the applied amount of adhesive between the layers are from 0.1 to 50% and from about 0.05 to 3 g/m$^2$, respectively, in the dried and solidified state.

The adhesive mainly consisting of borosiloxane resin was applied to one surface of a ribbon having a thickness of 28 $\mu$m and a width of 5 cm with a composition of $Fe_{78}B_{12}Si_{10}$ in a dot-like pattern as shown in Fig. 1a under the conditions that the occupying area ratio and the average applied amount were about 5% and from 0 to 5 g/m$^2$, respectively. After air drying, another ribbon was laminated thereto. Then, the adhesive was applied and air-dried in the same manner as in the first layer, and a third ribbon was put thereon. Thereafter, the ribbons were laminated under pressure between contact bonding rolls. Next, the ribbons were adhered under heating at 250°C for 5 minutes, and annealed at 370°C in a magnetic field of 200 A/m for one hour, and left to be cooled.

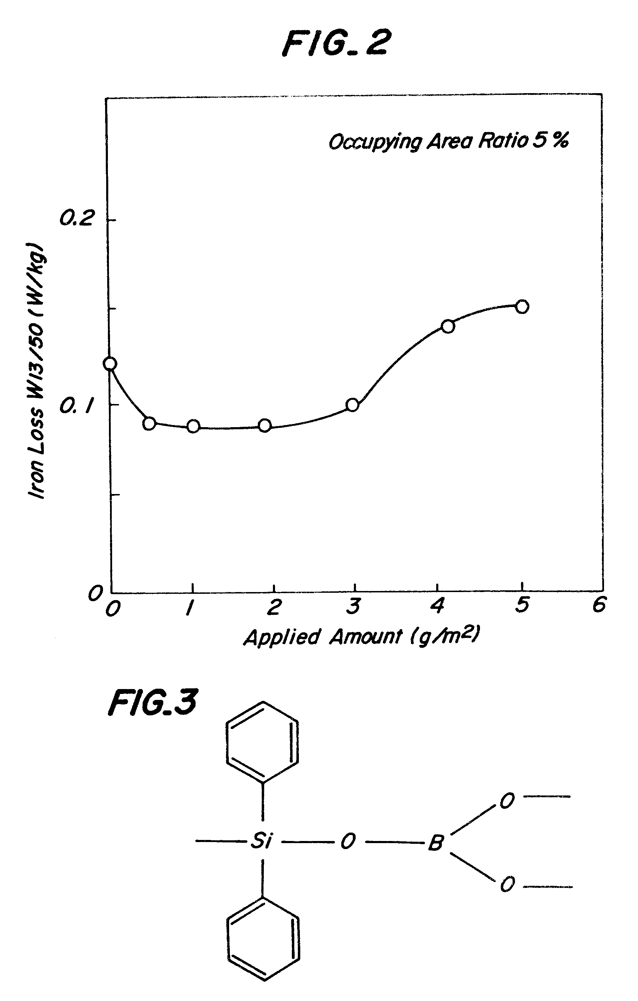

The relation between the applied amount of the adhesive and the iron loss of the thus obtained laminate after the adhesive was dried and solidifed was examined, and results thereof are shown in Fig. 2.

As is evident from Fig. 2, when the applied amount of the adhesive is not more than 3 g/m$^2$, the iron loss characteristics are not deteriorated through adhesion. However, if the applied amount is less than 0.05 g/m$^2$, satisfactory adhesive strength can not be assured. Thus, the applied amount of the adhesive is preferably from 0.05 to 3 g/m$^2$.

Next, the relationship was investigated between the occupying area ratio and the iron loss after the adhesive was dried and solidified The applied area ratio was variously changed according to the above-mentioned experiment except that the annealing conditions in the magnetic field were 400°C and 1 hour, and results thereof are shown in Table 2. The thickness of the adhesive was set constant at 2.2 $\mu$m in all the cases.

Table 2

| Occupying area ratio of adhesive (%) | Iron loss $W_{13/50}$ (W/kg) |
|---|---|
| 0 | 0.11 |
| 0.1 | 0.09 |
| 1 | 0.09 |
| 10 | 0.10 |
| 50 | 0.11 |
| 100 | 0.19 |

As is evident from Table 2, when the occupying area ratio of the adhesive is not more than 50%, excellent iron loss characteristics can be obtained. However, if it is less than 0.1%, satisfactory adhesive strength can not be obtained. Thus, it is preferable that the occupying area ratio is from 0.1 to 50%.

In the above-mentioned partial adhesion, the thickness of the adhering layer is not found to be a problem, but the thickness of the adhering layer is preferably set at about from 0.05 to 2.0 $\mu$m as in the case of the whole surface adhesion.

The laminate is produced basically through repeating the treatment of applying the adhesive onto one surface of a single ribbon and contact bonding another ribbon thereto. However, the adhesive may be simultaneously applied to a plurality of ribbons, and the adhering may be carried out under pressure in one stage. Alternatively, it may be that the adhesive is applied to the opposite surfaces of one of the ribbons, and the other ribbons are put thereupon and the three ribbons are simultaneously adhered together under application of pressure.

As the contact bonding method, a method of applying a light pressure by using a pressure press or a contact bonding roll is preferred.

Then, as mentioned above, a product is obtained by performing the preliminary drying at 250 to 300°C and subsequent annealing at 300 to 450°C in a magnetic field.

The product can be obtained through direct annealing at 300 to 450°C in the magnetic field after the contact bonding without undergoing the preliminary drying.

For the ribbon used in the present invention as the starting material, use may be made of any one having excellent magnetic characteristics, and the following ones are particularly advantageously adopted.

Fe-Si-B system     : $Fe_{78}B_{12}Si_{10}$, $Fe_{78}B_{10}Si_{12}$, $Fe_{80}B_{12}Si_8$

Fe-Si-B-C system    : $Fe_{78}B_{11}Si_{10}C_1$, $Fe_{77}B_{13}Si_{10}C_1$, $Fe_{80}B_{13}Si_6C_1$

Co-Fe-Si-B system   : $Co_{70}Fe_5Si_{15}B_{10}$, $Co_{70}Fe_5Si_{10}B_{15}$

The reason why an adhesive mainly consisting of borosiloxane is used as the adhesive according to the present invention is as follows:

Commonly used high temperature resistant organic resins such as polyimides or polyamidoimides may be used in the case that the optimum annealing temperature in the magnetic field is as relatively low as from 300 to 350°C. However, in the case that the annealing needs to be carried out in the magnetic field at 350 to 400°C as in the case with an Fe based amorphous alloy, a heat decomposition reaction occurs even with the above-mentioned polyimide or polyamidoimide heat resistant resins, and the adhesive strength completely disappears.

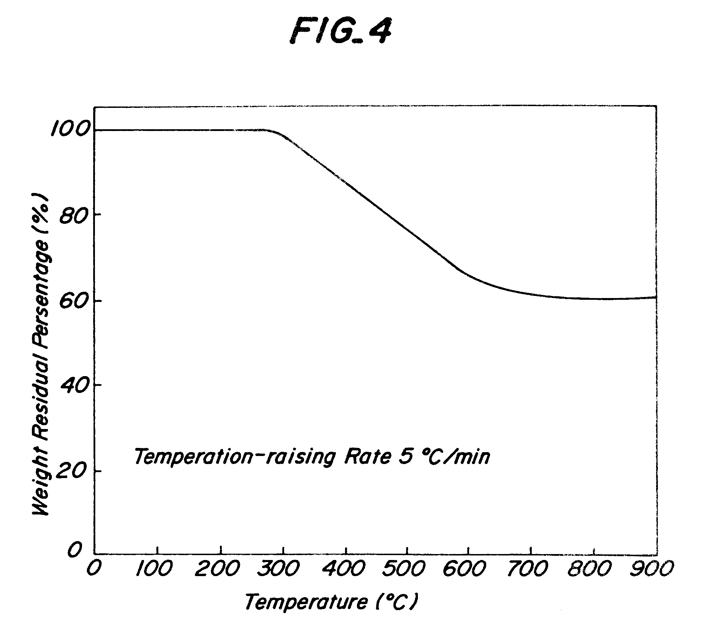

On the other hand, to the contrary, as shown in Fig. 3, since borosiloxane contains Si-O bonds and B-O bonds as the main chain which bonds have a larger bonding energy than the C-C bond, C-O bond and C-N bond which comprise the main chains of ordinary organic polymers, the occurence of heat decomposition is much delayed as compared with the conventional heat resistant resins. Therefore, even though the inorganic tendency due to the decomposition of the organic functional groups occurs to a conspicuous extent during the annealing in the magnetic field, as is obvious from the thermal analysis curve of Fig. 4, the heat decomposition of the organic portions proceeds only by 50% during heating at around 400°C. Consequently, sufficient adhesive strength can be ensured in the case of the borosiloxane resin based adhesive even after the annealing at from 350 to 400°C in the magnetic field.

In this respect, with respect to the conventional adhesives mainly composed of one kind or a mixture of more than one kind of polymers such as poly(phenylene)oxide, poly(p-xylylene), aromatic polysulfone, aromatic polyamidoimide, polyester imide, aromatic polyimide, and phenoxy resin proposed as the heat resistant adhesives in Japanese patent application laid-open No. 58-175,654, the heat decomposition and carbonization occur in the annealing at high temperatures of not less than 350°C to diminish the adhesion ability.

5

As the above borosiloxane resin based adhesive, there may be used a paint comprising borosiloxane resin, silicone resin, and an inorganic filler, and so on.

It is preferable that whilst the laminate is in the preliminary dried state (or where preliminary drying is not carried out) that annealing is generally carried out at a temperature not more than the Curie point, 300-450ºC, in a proper magnetic field to thus finally solidify the adhering layer after the laminate has been preliminarily shaped into a form near the profile of the final coiled core or laminate core.

Thus, the core is shaped to an intended profile, while it exhibits best magnetic characteristics.

Two ribbons having a width of 5cm and a thickness of 30 m with a composition of $Fe_{78}B_{10}Si_{12}$ were experimentally prepared. The adhesive mainly consisting of borosiloxane resin was applied to one surface of one of the ribbons in such an applied amount as to adjust the average film thickness to 1 m. The remaining ribbon was laminated to the first ribbon, and the resulting laminate was lightly pressed between two rolls and then subjected to a preliminarily drying treatment at 300ºC for 3 minutes. Since phenyl groups and methyl groups in the adhesive were not broken through the above heat treatment, that is, the organic molecular structure was maintained, the adhering layer was proved to be soft.

The magnetic characteristics at this stage were the same as those of the as-cast material.

Next, the resulting laminate was preliminarily shaped as a toroidal core of a diameter of 60 mm, annealed at 370°C in a magnetic field of 200 A/m for one hour, and left to cool.

Through this heat treatment, the magnetic characteristics of the core were remarkably improved, the adhesive was finally dried, and the laminate was shaped into the final product profile as core.

At that time, no abnormality was observed in the adhesion in the preliminarily shaping stage.

Thus, the iron loss $W_{13/50}$ of the toroidal core of the final product profile at 50 Hz and 1.3 T was 0.12 W/kg, which was far superior to 0.15 W/kg in ribbons with no adhesive applied.

A similar experiment was performed except that ribbons having a width of 5 cm and a thickness of 25 $\mu$m with a composition of $Fe_{78}B_{12}Si_{10}$ were used. The adhesive mainly consisting of borosiloxane was applied such that the occupying area ratio and the applied amount after the adhesive was dried and solidified were 5% and 1 $g/m^2$, respectively. The ribbons were laminated together, and pressed between rolls and subjected to a preliminarily drying treatment at 250ºC for 5 minutes.

The magnetic characteristics at that stage were the same as those of an as-cast material.

Next, the resulting laminate was preliminarily shaped as a toroidal core of 60 mm in diameter, which was annealed at 400ºC in a magnetic field of 200 A/m for one hour and left to cool.

The iron loss $W_{13/50}$ of the toroidal core as the final product profile was 0.09 W/kg, which was superior to 0.11 W/kg in the case of ribbons with no adhesive applied.

The following examples are illustrative of the invention.

Example 1

An adhesive mainly consisting of borosiloxane resin was applied uniformly on the whole one surface of a ribbon having a width of 5cm and a thickness of 25 $\mu$m with a composition of $Fe_{78}B_{12}Si_{10}$ such that the thickness was 0.8 $\mu$m after the adhesive was dried and solidified. Then, after air drying at 100°C for 1 minute, another ribbon was laminated onto the former one, which was subjected to press contacting by rolls. Then, a laminate was obtained by continuously heating at 250°C for 3 minutes.

Thereafter, the laminate was annealed at 370°C in a magnetic field of 20 Oe for 1 hour, and then left to cool.

The iron loss $W_{13/50}$ of the thus obtained amorphous alloy thin sheet laminate was 0.11 W/kg.

Peeling of the adhering layer in the above treatment was not observed at all, and the laminate could be handled as laminated ribbons even after the annealing.

Comparative Example 1

Treatment was done similarly to Example 1 except that polyester imide resin was used as an adhesive. Consequently, the adhesive strength was completely lost after the annealing, and the product could not be handled as laminated ribbons.

Example 2

Five ribbons having a width of 5 cm and a thickness of 25 $\mu$m with a composition of $Fe_{78}B_{12}Si_{10}$ were prepared. Borosiloxane resin based adhesive was applied onto one surface of each of the ribbons in a dot-like pattern (see Fig. 1a) such that the occupying area ratio and the average applied amount after the drying and solidification were 5% and 0.8 g/m$^2$, respectively. After air drying at 100°C for 1 minute, the five ribbons were simultaneously put upon each other and converted into a laminate under press contacting by rolls.

Then, this laminate was annealed at 400°C in a magnetic field of 20 Oe for 30 minutes, and left to cool.

The iron loss $W_{13/50}$ of the thus obtained amorphous alloy thin sheet laminate was 0.09 W/kg, which was far superior to 0.11 W/kg in the case of a laminate with no adhesive applied. Further, peeling of the adhering layer was not observed at all, and the laminate could be handled as laminated ribbons.

Example 3

Treatment was carried out similarly to Example 2 except that the occupying area ratio and the average applied amount after drying and solidifying were 10% and 1.5 g/m$^2$, respectively.

The iron loss $W_{13/50}$ of the thus obtained amorphous alloy thin sheet laminate was 0.10 W/kg.

Comparative Example 2

Treatment was carried out similarly to Example 2 except that a polyester imide resin was used as the adhesive. The adhesive strength was lost by the annealing at 400°C in a magnetic field, and the product could not be handled as laminated ribbons.

Example 4

Two ribbons having a width of 2 cm and a thickness of 26 $\mu$m with a composition of $Fe_{78}B_{10}Si_{12}$ were laminated together through the application of borosiloxane resin (SMR 109). The thickness of the adhering layer was 0.5 $\mu$m.

The laminate was preliminarily dried at 300°C for 2 minutes, then preliminarily shaped in a toroidal core form, and finally shaped into a toroidal core through annealing at 400°C in a magnetic field (20 Oe) for 30 minutes.

The occupying area ratio and the iron loss $W_{13/50}$ were 80.2% and 0.14 W/kg, respectively. As a matter of course, peeling of the adhering layer did not take place.

Example 5

Treatment was carried out similarly to Example 4 except that the average thickness of the adhesive was 0.1 $\mu$m. The occupying area ratio and $W_{13/50}$ were 80.4% and 0.14 W/kg, respectively.

Comparative Example 3

The occupying area ratio and $W_{13/50}$ after the magnetic field annealing of a toroidal core treated similarly to Example 4 with the thin sheets being not adhered through application of adhesive were 80.4% and 0.15 W/kg, respectively.

Example 6

Five ribbons having a width of 5 cm and a thickness of 25 $\mu$m with a composition of $Fe_{78}B_{12}Si_{10}$ were prepared, and the borosiloxane resin based adhesive was applied in a dot-like pattern (see Fig. 1c) onto one surface of each of the ribbons such that the occupying area ratio and the applied amount between layers after the drying and solidification were 2% and 0.5 g/m$^2$, respectively. After air drying at 100°C for one minute, five ribbons were laminated together and press contacted by rolls. Then, a laminate was obtained through continuously annealing at 250°C for 3 minutes.

Next, after the laminate was preliminarily shaped into a toroidal shape from, it was annealed at 400°C in a magnetic field of 20 Oe for 30 minutes, and left to cool.

The iron loss $W_{13/50}$ of the thus obtained core was 0.09 W/kg, which was far superior to 0.11 W/kg in the case of a core shaped with no adhesion. Peeling of the adhering layer was not observed at all.

Example 7

Treatment was carried out similarly to Example 6 except that the occupying area ratio and the average applied amount of the adhesive after the drying and solidifying were 8% and 1.0 g/m$^2$, respectively. The iron loss $W_{13/50}$ of the thus obtained core was 0.10 W/kg.

Comparative Example 4

Treatment was carried out similarly to Example 6 except that a polyester imide resin was used as the adhesive. Adhesive strength was lost through annealing at 400°C in a magnetic field and the product could not be handled as a core.

By means of the present invention, the amorphous alloy thin sheets can be adhered together without the magnetic characteristics thereof being deteriorated, so that the number of coiling steps and the number of the laminating steps can be largely reduced. Thus, the invention is particularly suitable for the production of cores for use in electric power transformers and audio magnetic heads.

## Claims

1. A process for the production of a laminate comprising a plurality of adhesive layers which process comprises the steps of
   (i) coating a thin sheet of amorphous alloy with a discontinuous layer of adhesive,
   (ii) applying a second thin sheet of amorphous alloy to said adhesive layer and laminating and contact bonding said thin sheets of amorphous alloy by means of said adhesive layer,
   (iii) coating an outside surface of said laminated thin sheets of amorphous alloy with a further discontinuous layer of adhesive,
   (iv) applying a further thin sheet of amorphous alloy to said further adhesive layer and laminating and contact bonding said further thin sheet of amorphous alloy to said laminated thin sheets of amorphous alloy by means of said further adhesive layer,
   (v) repeating steps (iii) and (iv) to form a laminate having the desired number of thin sheets of amorphous alloy, and
   (vi) subjecting said laminate to at least one heat treatment
      characterised in that said adhesive layers substantially comprise a borosiloxane resin and in that said adhesive layers applied discontinuously between the thin sheets of amorphous alloy are subjected to a preliminary drying at a temperature of from 250 to 300ºC prior to said heat treatment.

2. A process for the production of a core for a transformer which process comprises forming a laminate in accordance with the process of claim 1 and, after the preliminary drying, preliminarily moulding the laminate to form the core.

3. A process as claimed in claim 1 or 2 wherein the area of the thin sheets of amorphous alloy occupied by the adhesive is from 0.1 to 50% and wherein the adhesive is applied in an amount of from 0.05 to 3 gm$^{-2}$.

4. A process as claimed in claim 1, 2 or 3 wherein the final thickness of the adhesive layer is from 0.05 to 2.0µm.

5. A process according to any preceding claim wherein the heat treatment includes a treatment in a magnetic field at a temperature of from 300 to 450ºC.

6. A process according to claim 5 wherein the heat treatment is an annealing.

## Revendications

1. Un procédé pour la production d'une lamine comprenant une pluralité de couches adhésives, lequel procédé comprend les étapes consistant à:
   (i) revêtir une bande mince d'alliage amorphe d'une couche d'adhésif discontinue,
   (ii) appliquer une seconde bande mince d'alliage amorphe sur ladite couche adhésive et laminer et assembler par contact lesdites bandes minces d'alliage amorphe à l'aide de ladite couche adhésive,
   (iii) revêtir une surface extérieure desdites bandes minces d'alliage amorphe laminées d'une nouvelle couche adhésive discontinue,
   (iv) appliquer une nouvelle bande mince d'alliage amorphe sur ladite couche adhésive et laminer et assembler par contact ladite nouvelle bande mince d'alliage amorphe sur lesdites bandes minces d'alliage amorphe laminées, à l'aide de ladite nouvelle couche adhésive,

(v) répéter les étapes (iii) et (iv) pour former une lamine présentant le nombre désiré de bandes minces d'alliage amorphe, et

(vi) soumettre ladite lamine à au moins un traitement thermique, caractérisé en ce que lesdites couches adhésives comprennent essentiellement une résine borosiloxane et que lesdites couches adhésives appliquées de manière discontinue entre les bandes minces d'alliage amorphe sont soumises à un séchage préliminaire à une température de 250 à 300°C avant ledit traitement thermique.

**2.** Un procédé pour la production d'un noyau pour un transformateur, lequel procédé comprend la formation d'une lamine suivant le procédé de la revendication 1 et, après le séchage préliminaire, le moulage préliminaire de la lamine pour former le noyau.

**3.** Un procédé suivant la revendication 1 ou 2, dans lequel la surface des bandes minces d'alliage amorphe occupée par l'adhésif est de 0,1 à 50% et dans lequel l'adhésif est appliqué en une quantité de 0,05 à 3 gm$^{-2}$.

**4.** Un procédé suivant la revendication 1, 2 ou 3, dans lequel l'épaisseur finale de la couche adhésive est de 0,05 à 2,0 $\mu$m.

**5.** Un procédé suivant l'une des revendications précédentes, dans lequel le traitement thermique comprend un traitement dans un champ magnétique à une température de 300 à 450°C.

**6.** Un procédé suivant la revendication 5, dans lequel le traitement thermique est un recuit.

## Patentansprüche

**1.** Verfahren zur Herstellung eines Lamellenpakets welches eine Vielzahl von Klebstoffschichten umfaßt, wobei das Verfahren folgende Schritte umfaßt:

(i) Auftragen einer diskontinuierlichen Schicht Klebstoff auf einem dünnen Blech aus amorpher Legierung,

(ii) Aufbringen eines zweiten dünnen Blechs aus amorpher Legierung auf die Klebstoffschicht und Laminieren und Kontaktverbinden der dünnen Bleche aus amorpher Legierung mittels der Klebstoffschicht,

(iii) Aufbringen einer weiteren diskontinuierlichen Schicht Klebstoff auf eine Außenoberfläche der laminierten, dünnen Bleche aus amorpher Legierung,

(iv) Aufbringen eines weiteren dünnen Blechs aus amorpher Legierung auf die weitere Klebstoffschicht und Laminieren und Kontaktverbinden des weiteren dünnen Blechs aus amorpher Legierung mit den laminierten dünnen Blechen aus amorpher Legierung mittels der weiteren Klebstoffschicht,

(v) Wiederholen der Schritte (iii) und (iv) zur Bildung eines Laminats mit der gewünschten Anzahl von dünnen Blechen aus amorpher Legierung und

(vi) mindestens einmaliges Wärmebehandeln des Laminats, dadurch gekennzeichnet, daß die Klebstoffschichten im wesentlichen ein Borsiloxanharz umfassen und die diskontinuierlich zwischen den dünnen Blechen aus amorpher Legierung aufgebrachten Klebstoffschichten vor der Wärmebehandlung einer Vortrocknung bei einer Temperatur von 250 bis 300°C unterzogen werden.

**2.** Verfahren zur Herstellung eines Kerns für einen Transformator, dadurch gekennzeichnet, daß ein Laminat in Übereinstimmung mit dem Verfahren nach Anspruch 1 gebildet wird und das Laminat nach der Vortrocknung zur Bildung eines Kerns vorgeformt wird.

**3.** Verfahren nach Anspruch 1 oder 2, dadurch gekennzeichnet, daß der von dem Klebstoff eingenommene Bereich der dünnen Bleche aus amorpher Legierung 0,1 bis 50% beträgt und der Klebstoff in einer Menge von 0,05 bis 3 gm$^{-2}$ aufgetragen wird.

**4.** Verfahren nach Anspruch 1, 2 oder 3, dadurch gekennzeichnet, daß die endgültige Dicke der Klebeschicht 0,05 bis 2,0 $\mu$m beträgt.

5. Verfahren nach einem der vorhergehenden Ansprüche, dadurch gekennzeichnet, daß die Wärmebehandlung eine Behandlung in einem Magnetfeld bei einer Temperatur von 300 bis 450°C umfaßt.

6. Verfahren nach Anspruch 5, dadurch gekennzeichnet, daß die Wärmebehandlung ein Glühen ist.

# FIG.1a

# FIG.1b

# FIG_Ic

# FIG_Id

## FIG. 2

Occupying Area Ratio 5%

Iron Loss W13/50 (W/kg) vs Applied Amount (g/m²)

## FIG. 3

## FIG. 4